(19) Europäisches Patentamt
European Patent Office
Office européen des brevets

(11) Veröffentlichungsnummer: **0 432 417 B1**

(12) **EUROPÄISCHE PATENTSCHRIFT**

(45) Veröffentlichungstag der Patentschrift: **11.01.95**

(51) Int. Cl.[6]: **B60C 1/00**, C08K 5/39, C08L 21/00

(21) Anmeldenummer: **90120236.6**

(22) Anmeldetag: **22.10.90**

(54) **Reifenlaufflächen mit erhöhter Laufleistung und Verfahren zu ihrer Herstellung.**

(30) Priorität: **13.12.89 DE 3941118**

(43) Veröffentlichungstag der Anmeldung:
**19.06.91 Patentblatt 91/25**

(45) Bekanntmachung des Hinweises auf die Patenterteilung:
**11.01.95 Patentblatt 95/02**

(84) Benannte Vertragsstaaten:
**AT BE CH DE ES FR GB IT LI LU NL SE**

(56) Entgegenhaltungen:
**EP-A- 0 385 072**
**DE-C- 2 265 382**

(73) Patentinhaber: **HÜLS AKTIENGESELLSCHAFT**

**D-45764 Marl (DE)**

(72) Erfinder: **Hörpel, Gerhard, Dr.**
**Lerchenhain 84**
**W-4405 Nottuln (DE)**
Erfinder: **Nordsiek, Karl-Heinz, Dr.**
**Neumarkstrasse 4**
**W-4370 Marl (DE)**
Erfinder: **Zerpner, Dieter, Dr.**
**Neulandstrasse 110**
**W-4370 Marl (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft Reifenlaufflächen auf Basis von Polydien-Kautschuken sowie üblichen Zuschlagstoffen und ein Verfahren zu ihrer Herstellung.

Die Laufflächen von Reifen nehmen unter den Bauelementen des Reifens eine Sonderstellung ein. Dies liegt vor allem daran, daß die Reifenlauffläche die schmale Kontaktfläche zwischen Fahrzeug und Fahrbahn bildet. Die Eigenschaften eines Fahrzeugs beim Fahren hängen daher in besonders sensibler Weise von der Art und Qualität des in der Lauffläche verwendeten Gummis ab.

Es besteht grundsätzlich ein großes Interesse an Reifenlaufflächen mit erhöhter Laufleistung. Die Laufleistung der modernen Radialreifen wird wesentlich bestimmt durch folgende Kriterien der Lauffläche:

1. die spezielle Zusammensetzung des Compounds (Ruß/Öl-Gehalt, Vernetzungssystem),
2. die Art des Kautschuks und
3. die Mikrostruktur und das Molekulargewicht des Kautschuks.

Die bekannte Reihenfolge der infrage kommenden Polydiene hinsichtlich Abriebwiderstand lautet:

BR > SBR > NR/IR

In Übereinstimmung mit diesen Erfahrungen zeigen reine BR-Laufflächen ein Optimum an Lebensdauer.

Angesichts eines sehr breiten Anforderungsprofils kann die Laufleistung jedoch nicht isoliert betrachtet werden. Fragen der Fahrsicherheit lassen dem Rutschwiderstand, insbesondere auf nasser Fahrbahn, eine noch höhere Bedeutung zukommen. Für diese Eigenschaft gilt die zuvor genannte Polymerabstufung jedoch in umgekehrter Reihenfolge.

Da Abriebverhalten und Rutschwiderstand auf den gleichen molekularen Bewegungsprinzipien beruhen, stellt die Gestaltung der Zusammensetzung einer Reifenlauffläche stets einen Kompromiß dar.

Bei Reifen, die für hohe Tragfähigkeit bestimmt sind, als auch bei Reifen, die für hohe Geschwindigkeiten konstruiert sind, ist darüber hinaus die enorme Wärmebildung beim Fahren zu berücksichtigen. Damit wird die Wahl der Rohstoffe mit einem weiteren Schwierigkeitsgrad belastet.

Eine gleichzeitige Verbesserung von Abrieb- und Rutschverhalten ist beispielsweise bei Einsatz von Rußen mit erhöhter Ruß/Kautschuk-Wechselwirkung möglich. Mit steigender Rußaktivität treten jedoch zunehmend Schwierigkeiten bei der Verteilung der Rußteilchen in der Kautschukphase auf. Zudem wird die Wärmebildung bei dynamischer Beanspruchung solcher Vulkanisate wesentlich erhöht.

Die Probleme der mit der Alterung einhergehenden Modifikationen des Gummis versucht man seit Jahrzehnten durch Einsatz spezieller Sauerstoff-und Radikalakzeptoren, den sogenannten Antioxidanzien bzw. Antiozonanzien, zu mildern. Zwar wird damit der Qualitätsminderung durch Rißbildung und Verhärtung entgegen gewirkt, der Einfluß dieser Schutzwirkung auf den Abrieb ist jedoch unbedeutend.

Eine weitere Variable bei der Optimierung von Laufflächenvulkanisaten stellt die Beeinflussung der Schwefel-Netzbrücken dar. Bei Verwendung der üblichen Schwefel/Beschleuniger-Systeme erhält man in der Regel Vulkanisate, deren Polymerketten durch polysulfidische Brückenglieder verküpft sind. Derart vernetzte Vulkanisate ergeben bei einer Vielzahl von Eigenschaften gute Ergebnisse (vgl. A.V. Chapman, M. Porter "Sulfur Vulcanization Chemistry" in "Natural Rubber-Science and Technology", A.D. Roberts ed., Oxford Press, 1988). Dies trifft neben der mechanischen Festigkeit insbesondere auch für den Abriebwiderstand zu. Ein Nachteil liegt jedoch darin, daß unter thermischer Belastung ein Abbau der polysulfidischen Brücken bis hin zur monosulfidischen Anordnung stattfindet. Der dabei frei werdende Schwefel lagert sich einerseits an Polymersegmente an und katalysiert zum anderen den Angriff des Sauerstoffs auf den Gummi. Beide Effekte führen zu einer Schädigung des Netzwerks. Die genannten Folgereaktionen des Schwefels, die bereits im Verlauf des Vulkanisationsprozesses einsetzen können, beeinflussen wesentlich die Leistungsgrenzen einer Lauffläche beim Betrieb eines Fahrzeugs und erfordern daher Beschränkungen im Hinblick auf die optimale Gestaltung des Fertigungsprozesses (siehe hierzu ebenfalls A.V. Chapmann, M. Porter in dem zuvor zitierten Artikel). Eine Maßnahme zur Verringerung der Folgereaktionen des Schwefels stellt die Anwendung sogenannter EV-Systeme dar; dies sind Systeme, die aus erhöhten Mengen an Vulkanisationsbeschleunigern bei gleichzeitig minimalen Mengen an Schwefel bestehen. Infolge der rascheren Anvulkanisation wird die Verarbeitungssicherheit jedoch nachteilig verändert. Von größerer Tragweite für die Qualität von Reifenlaufflächen ist jedoch die vorprogrammierte Beeinträchtigung des Abriebwiderstandes (vgl. P.M. Lewis "Vulcanizate structure and its effects on properties" in NR-Technology Quarterly Volume 17, Part 4, Seite 57 ff. (1986).

Ziel der vorliegenden Erfindung ist es, Reifenlaufflächen zu entwickeln, mit denen unter Beibehaltung eines guten Rutschverhaltens eine wesentliche Steigerung der Laufleistungen von Reifen aller Größen zu erzielen ist.

Es wurden jetzt Reifenlaufflächen auf Basis von Polydien-Kautschuken sowie üblichen Zuschlagstoffen wie Rußen, Kieselsäuren, Weichmachern, Harzen und Vulkanisationsmitteln gefunden, mit denen dieses Ziel

erreichbar ist. Der erfinderische Gedanke besteht darin, daß anstelle oligomerer S-Brücken zur Netzwerkformierung stabile 1,2-Dithioethandiyl-Brücken eingeführt werden. In der DE-OS 39 41 118 wird als Vernetzungsreagenz bevorzugt 1,2-Bis(N,N-diethylthiocarbamoyldithio)-ethan eingesetzt. Diese Substanz bildet bei der Verarbeitung bzw. Vulkanisation aber carcinogenes Nitrosamin, was beim Verarbeitungsprozeß aufwendige Sicherheitsvorkehrungen erfordert.

Überraschend wurde nun gefunden, daß für die Herstellung von Reifenlaufflächen mit erhöhter Laufleistung auf Basis von Polydien-Kautschuken sowie üblichen Zuschlagstoffen, wie Rußen, Kieselsäuren, Weichmachern, Harzen und Vulkanisationsmitteln, die Kautschuke mit 1,2-Bis(N,N-dibenzylthiocarbamoyldisulfido)-ethan vernetzt werden können. 1,2-Bis(N,N-dibenzylthiocarbamoyldisulfido)-ethan [nach IUPAC: N.N-Dibenzylthiocarbamidsäure-(dithioperoxo)-1.2-ethandiylester], in folgenden abgekürzt BDBzTE, erfüllt die vielfältigen Anforderungen an ein solches Vernetzungsreagenz. Darüber hinaus weist BDBzTE aus toxikologischer Sicht einen sehr wichtigen Vorteil auf, denn bei der Verarbeitung bzw. Vulkanisation kann eine Abspaltung des zur Synthese des Vernetzungsmittels eingesetzten sekundären Amins stattfinden, gefolgt von einer nachträglichen Nitrosierung analog den Beobachtungen beim Einsatz einiger konventioneller Vulkanisationsbeschleuniger auf Basis von Zinkdithiocarbamaten und Thiuramen. Die besonders glatt aus sekundären Aminen entstehenden Nitrosamine und ihre carcinogene Wirkung ist seit längerer Zeit Gegenstand ausführlicher Untersuchungen (vgl. "Das Nitrosamin-Problem" Deutsche Forschungsgemeinschaft, Herausgeber R. Preussmann, Verlag Chemie 1983). Dabei wurde in der Reihe der sekundären Amine einige Verbindungen gefunden (vgl. Druckrey et al., Z. Krebsforschung 69 (1967) 103), deren Nitrosamine nicht carcinogen wirken. Unter diesen sekundären Aminen nimmt Dibenzylamin im Sinne der Erfindung aus folgenden Gründen eine Sonderstellung ein:

1) Dibenzylamin ist gut zugänglich und enthält keine umweltgefährdenden Bestandteile, wie z. B. Bis-(2.2.2-trifluorethyl)-amin.

2) Der Aminstickstoff ist sterisch nicht in einer Weise abgeschirmt, daß eine Reaktion mit Schwefelkohlenstoff + Alkalihydroxid zum als Zwischenprodukt benötigten Alkalidithiocarbamat verhindert wird, wie z. B. bei 2.2.6.6-Tetramethylpiperidin [vgl. J. f. prakt. Chem. 319 (1977) 516].

3) Die Alkalisalze der N,N-Dibenzyldithiocarbamidsäure sind nicht hydrolyseempfindlich, so daß sie mit hoher Ausbeute sowohl im Wasser hergestellt als auch zum Vernetzer BDBzTE umgesetzt werden können, was z. B. mit tert.-Butyl-methylamin nicht möglich ist.

4) Anhand der Vulkametrie wurde gefunden, daß mit entsprechenden molaren Mengen des auf Basis Dibenzylamin erhaltenen Vernetzers BDBzTE vergleichbar hohe Vernetzungsdichten wie mit solchen auf Basis Di(m)ethylamin erhalten werden. An der Vulkameterkurve läßt sich eindeutig erkennen, daß bei diesen drei Vernetzern bei 180 °C im Rahmen üblicher Reaktionszeiten keine Reversion stattfindet. Im Gegensatz dazu wird überraschenderweise mit entsprechenden Vernetzern, die aus Dicyclohexylamin oder 2.6-Dimethylpiperidin synthetisiert wurden, eine erheblich geringere Vernetzungsdichte und deutliche Reversion beobachtet, so daß diese Verbindungen nicht erfindungsgemäß einsetzbar sind.

Als Kautschuke kommen insbesondere NR, IR, BR und/oder SBR infrage; bevorzugt sind Integralkautschuke (s. K.H. Nordsiek, Kautschuk und Gummi-Kunststoffe 38, Seite 178, (1985), DE-OSS 37 10 002, 37 24 871 und 38 04 547). Die Vernetzungsreaktion wird insbesondere bei Temperaturen von 150 bis 200 °C, vorzugsweise 170 bis 190 °C, durchgeführt. Gegenstand der Erfindung sind schließlich auch die Verfahren zur Herstellung dieser Reifenlaufflächen gemäß den Ansprüchen 4 bis 8.

Die mit den erfindungsgemäßen Reifenlaufflächen erzielte Verringerung des Abriebs ist markant. Trotz der beträchtlich erhöhten Laufleistung wird ein unverändertes Maß an Rutschsicherheit gewährleistet. Dies bedeutet, daß der eingangs genannte Kompromiß aus Abriebverhalten und Rutschwiderstand erheblich verbessert wird. Der Effekt wirkt sich besonders vorteilhaft bei Integralkautschuken aus. Neben dem Abriebwiderstand, insbesondere nach Bewitterung und Alterung, zeigen auch die übrigen Vulkanisateigenschaften wie beispielsweise Reißfestigkeit, Reißdehnung und Weiterreißwiderstand, vor allem aber die der Elastizität zuzuordnenden Eigenschaften, insbesondere der heat build-up, ein überlegendes Verhalten.

Die Laufflächen von Reifen mit Notlaufeigenschaften, d. h. Reifen, mit denen man selbst dann noch fahren kann, wenn sie undicht geworden sind, sind im Notfalle einer ungewöhnlich starken mechnischen und thermischen Belastung unterworfen. Bei diesen wirkt sich der Einsatz des erfindungsgemäßen Vernetzungsreagenzes besonders vorteilhaft aus.

Aus der deutschen Patentschrift 22 56 511 ist die generelle Verwendung von organischen Polysulfidderivaten der allgemeinen Formel

$$(\text{Beschleuniger-S-S}_x)_n\text{-R-S}_x\text{-S-Beschleuniger}$$

zur Herstellung von thermisch stabilen Vulkanisaten bekannt, und 1,2-Bis(N,N-diethylthiocarbamoyldithio)-ethan und 1,2-Bis(N,N-dibenzylthiocarbamoyldithio)-ethan werden neben zahlreichen anderen Vulkanisationsmitteln erwähnt. Aber die Schrift enthält keinerlei Hinweise, daß diese Vulkanisationsmittel in hervorragender Weise zur Herstellung von Reifenlaufflächen mit erhöhter Laufleistung geeignet sind.

Zwar wird in der DE-PS 22 65 382 behauptet, die dort beschriebenen Vulkanisate besäßen eine erhöhte thermische Stabilität, aber diese Aussage bezieht sich nur auf den Fall, daß Schwefel zugesetzt wird (vgl. Tabelle 14 in Spalte 43 und 44). Offensichtlich können sehr hohe Moduleigenschaften nur bei Zusatz von Schwefel erreicht werden (vgl. Spalte 8, Zeile 38). Die brückenbildende Gruppe R kann ein nahezu beliebiger organischer Rest mit bis zu 50 oder mehr Kohlenstoffatomen sein (vgl. DE-OS 22 56 511, Spalte 6, Zeilen 40 bis 66). An keiner Stelle ist dieser Schrift zu entnehmen, daß die Ethylenbrücke allen anderen Resten im Hinblick auf Vernetzungsausbeute und Alterungseigenschaften überlegen ist (siehe auch Vergleichsversuche auf Seite 10 ff.). Insofern gaben diese Schriften in ihrem allgemeinen Offenbarungsgehalt dem Fachmann keine Anregung zur Lösung des hier beschriebenen konkreten Problems.

Als Kautschuke für das erfindungsgemäße Verfahren kommen ausschließlich Polydiene infrage. Von technischer Bedeutung sind insbesondere die folgenden Kautschuke:

- Naturkautschuke (NR)
- Isoprenkautschuke (IR)
- durch Emulsionspolymerisation erhaltene Styrol-Butadien-Kautschuke (E-SBR)
- durch Lösungspolymerisation erhaltene Styrol-Butadien-Kautschuke (L-SBR)
- Styrol-Butadien-Kautschuke mit einem Vinylgehalt von mehr als 15 %, bezogen auf die Butadieneinheiten (Vinyl-SBR)
- Butadien-Kautschuke, deren Doppelbindungen zu mehr als 20 % cis-ständig sind (cis-BR)
- Butadien-Kautschuke mit einem Vinylgehalt von mehr als 15 % (Vinyl-BR)

Die Definitionen der vorstehend aufgeführten Kautschuke sollen auch solche Copolymere einschließen, die bis zu 40 % andere übliche Comonomere enthalten. Selbstverständlich können auch Verschnitte der vorstehend aufgeführten Kautschuke eingesetzt werden. Bevorzugt werden SBR und SBR/BR-Verschnitte für Personenkraftwagen sowie NR, NR/BR- und NR/SBR-Verschnitte für Lastkraftwagen. Besonders bevorzugt sind Integralkautschuke.

Die Einführung der 1,2-Dithioethandiyl-Brücken erfolgt mit 1,2-Bis-(N,N-dibenzylthiocarbamoyldisulfido)-ethan (BDBzTE)

$$(C_6H_5CH_2)_2\,N-\overset{\overset{S}{\|}}{C}-S-S-CH_2-CH_2-S-S-\overset{\overset{S}{\|}}{C}-N\,(CH_2C_6H_5)_2$$

Bei der Wahl der Abgangsgruppen gibt es zur Thiocarbamoylgruppe keine Alternative. Die Xanthogenatabgangsgruppe ergibt keinerlei Vernetzungsausbeute. Bei Experimenten mit 1,2-bis-(O-iso-propylthiocarbonyldithio)-ethan in SBR- und NR-Mischungen blieben die Werte für den 300 % Modul vernachlässigbar klein. In Übereinstimmung mit der DE-OS 22 56 511 ergeben Dithiophosphatyl-, Benzothiazolyl- und Oxazolyl-Abgangsgruppen ohne Schwefelzusatz nur unbefriedigende Vernetzungsausbeuten. Darüber hinaus waren die Experimente mit Dithiophosphatylabgangsgruppen nur unter außerordentlich hohen Geruchsbelästigungen durchzuführen.

Die Auswahl der Vernetzungsbrücke fiel eindeutig auf $C_2$, da diese in puncto Vernetzungsausbeuten und Alterungseigenschaften des entsprechend vulkanisierten Kautschuks eindeutig den anderen überlegen war.

Ausgangspunkt der Synthese des erfindungsgemäß zu verwendenden Vernetzers ist Dichlorethan. Die Umsetzung mit Natriumthiosulfat führt in wäßriger Lösung zum Bis-Buntesalz. Dessen Reaktion mit Natriumdiethyl-dithiocarbamat liefert das 1,2-Bis(N,N-diethylthiocarbamoyldisulfido)-ethan (BDTE) (siehe DE-OS 22 56 511) und mit Natriumdibenzyl-dithiocarbamat analog das gewünschte 1,2-Bis(N,N-dibenzylthiocarbamoyldisulfido)-ethan (BDBzTE). BDBzTE ist ein "weißer" kristalliner Feststoff mit einem Schmelzpunkt von 112 bis 113 °C [$^{13}$C-NMR: $CH_2$ (Brücke) = 37 ppm, $CH_2$ (Benzylgruppe) = 54 und 58 ppm, C (Phenylring): 127 bis 135 ppm,

$$=N\underset{S}{C}S-:$$

199 ppm].

Die Herstellung der Vulkanisate erfolgt in an sich bekannter Weise durch Vermischen der Kautschukkomponente mit den Zuschlagstoffen. Entscheidend ist der Zusatz des erfindungsgemäßen Vernetzungsreagenzes. Übliche Zuschlagstoffe sind beispielsweise Ruße, Kieselsäuren, Weichmacher und Harze. Das Vermischen erfolgt in üblichen Mischungsaggregaten, z. B. Kneter, Walzwerke. Die dabei einzustellende Temperatur hängt in bekannter Weise von der Zusammensetzung des Compounds und den Mischungsverfahren ab. Auf Alterungs- und Ozonschutzmittel kann infolge der durch die erfindungsgemäß erreichbare hohe Netzwerkstabilität weitgehend verzichtet werden. Bezogen auf den Kautschuk werden in der Regel 5 bis 40 phr Öl und 40 bis 90 phr Ruß eingesetzt. Das Vernetzungsmittel wird in einer Menge von 3 bis 6 phr bzw. 4 bis g phr eingesetzt.

Die zusätzliche Verwendung von Schwefel bringt in der Regel keine Vorteile, da das Reversionsverhalten deutlich verschlechtert wird.

Erläuterungen zum experimentellen Teil

VULKANOX$^R$ 4010 NA (N-Isopropyl-N'-phenyl-p-phenylendiamin) ist ein Alterungs- und Ozonschutzmittel, das von der Fa. Bayer AG, D-5090 Leverkusen vertrieben wird.

VULKANOX$^R$ 4020 (N-(1,3-Dimethylbutyl)-N'-phenyl-p-phenylendiamin) ist ein Alterungs- und Ozonschutzmittel, das von der Fa. Bayer AG, D-5090 Leverkusen, vertrieben wird.

KORESIN$^R$ ist eine Umsetzungsprodukt von p-tert.-Butylphenol mit Acetylen, das als Verarbeitungshilfsmittel von der Fa. BASF AG, D-6700 Ludwigshafen, vertrieben wird.

CBS (N-Cyclohexyl-1-benzothiazolsulfenamid) ist ein Vulkanisationsbeschleuniger, der unter dem Warenzeichen VULKAZIT$^R$ CZ von der Fa. Bayer AG, D-5090 Leverkusen vertrieben wird.

Die Zugfestigkeit und Bruchdehnung wurden gemäß DIN 53 504 bestimmt.

Der Spannungswert, auch Modul genannt, bei 100 bzw. 300 % Dehnung wurde gemäß DIN 53 504 bestimmt.

Die Strukturfestigkeit wurde nach Pohle (vgl. S. Boström, Kautschuk-Handbuch, Band 5, Seite 123) bestimmt.

Die bleibende Dehnung (Zugverformungsrest) wurde gemäß DIN 53 518 bestimmt.

Die Härte (Shore A) wurde gemäß DIN 53 505 bestimmt.

Die Rückprallelastizität (Elast.) wurde gemäß DIN 53 512 bestimmt.

Der Abrieb wurde gemäß DIN 53 516 bestimmt.

Der Druckverformungsrest (Compression set) wurde gemäß DIN 53 517 bestimmt.

Die Prüfung der Wärmebildung (heat built-up) erfolgte gemäß DIN 53 533, Teil 3, mit Hilfe des Goodrich-Flexometers, im Versuchsteil als Methode 1 bezeichnet. Darüber hinaus wurden folgende erschwerte Bedingungen gewählt, die im Versuchsteil als Methode 5 bezeichnet werden:

Last: 500 N, Starttemperatur: 50 °C, Zeit: 25 Minuten

Die Kugelzermürbung bei den jeweiligen Belastungen wurde gemäß S. Boström, Kautschuk-Handbuch, 5. Band, Berliner Union, Stuttgart, S. 149, 150, bestimmt.

Die Vulkametrie wurde gemäß DIN 53 529 vorgenommen.

Experimenteller Teil

Sämtliche der nachfolgend beschriebenen Laufflächen-Vulkanisate wurden wie folgt hergestellt:

Mittels eines Innenmischers vom Typ GK 2 der Firma Werner und Pfleiderer wird bei einer Rotordrehzahl von 50 UpM sowie einer Manteltemperatur von 40 °C folgende Grundmischung bereitet:

| | |
|---|---|
| Kautschuk | 100 |
| ZnO | 3 phr |
| Stearinsäure | 2 phr |
| aromatisches Weichmacheröl | 10 phr |
| Ruß N-339 | 50 phr |
| Vernetzungsmittel | siehe Tabellen |

Dabei erfolgt die Zugabe der Zuschlagstoffe nach einer Minute Vorlaufzeit für den Kautschuk. Die Mischung wird eine Minute nach Überschreiten des Energiemaximums des Rotors ausgestoßen.

Nach sechsstündiger Ablagerungszeit werden auf einem Walzwerk bei einer Walzentemperatur von 50 °C innerhalb von 5 Minuten die Vernetzungsmittel eingearbeitet.

Die Art und Menge des Vernetzungsmittels sowie die Temperaturführung bei der nachfolgenden Vulkanisation sind den nachfolgenden Tabellen zu entnehmen.

Tabelle 1 a: Vulkanisation eines vormastizierten NR mit einer Mooney-Viskosität von 70 (RRS Nr. 3) (1. Teil)

| Beispiel | A | B | C a | D a | 1 a |
|---|---|---|---|---|---|
| Vernetzungssystem | Schwefel/ CBS 2,5/0,6 phr | Schwefel/ CBS 0,5/2,5 phr | 1,2-Bis-(N,N-dibenzyl-thiocarbamoyldisulfido-) -dekan 7,0 phr | -hexan 6,5 phr | -ethan 6,0 phr |
| Vulkameter 150 °C | | | | | |
| $t_{10}$ min | 7,7 | 5,2 | 13,6 | 13,7 | 13,1 |
| $t_{90}$ min | 12,9 | 8,9 | 33,8 | 34,3 | 29,0 |
| Delta t min | 5,2 | 3,7 | 20,2 | 20,6 | 15,9 |
| Struktur der Netzbrücken | $-S_x-$ | $-S_1-$ | $-S-(CH_2)_{10}-S-$ | $-S-(CH_2)_6-$ | $-S-(CH_2)_2-S-$ |
| Vulkanisationszeit bei 150 °C min | 30 | 30 | 40 | 40 | 40 |
| Zugfestigkeit MPa | 21,0 | 25,2 | 19,4 | 18,1 | 21,8 |
| Bruchdehnung % | 504 | 543 | 478 | 516 | 522 |
| Modul 100 % MPa | 1,8 | 1,7 | 1,3 | 1,4 | 1,7 |
| 300 % MPa | 9,5 | 10,1 | 7,9 | 8,3 | 9,6 |
| Strukturfest. N/mm | 74 | 71 | 70 | 71 | 78 |

Tabelle 1 a: (2. Teil)

| Beispiel | A | B | C a | D a | 1 a |
|---|---|---|---|---|---|
| Vernetzungssystem | Schwefel/ CBS 2,5/0,6 phr | Schwefel/ CBS 0,5/2,5 phr | 1,2-Bis-(N,N-dibenzyl-thiocarbamoyldisulfido-) -dekan 7,0 phr | -hexan 6,5 phr | -ethan 6,0 phr |
| bleib. Dehnung | 16 | 15 | 16 | 15 | 10 |
| Härte 22 °C Sh.A | 62 | 63 | 60 | 62 | 63 |
| 75 °C Sh.A | 56 | 55 | 55 | 54 | 56 |
| Rückprallelastizität 22 °C % | 47 | 47 | 40 | 40 | 43 |
| 75 °C % | 58 | 58 | 51 | 52 | 56 |
| DIN Abrieb $mm^3$ | 121 | 137 | 199 | 155 | 127 |
| Dichte $g/cm^3$ | 1,10 | 1,10 | 1,09 | 1,10 | 1,10 |
| Compr.-Set 24 h/70 °C % | 34 | 27 | 36 | 35 | 30 |
| Goodrich Methode 1 °C | +26 | +21 | +27 | +25 | +22 |
| Fließ | -3,2 | -1,8 | -3,9 | -2,4 | -0,9 |
| Methode 5 °C | +42 | +33 | +45 | +39 | +31 |
| Fließ | -4,8 | -2,0 | -6,3 | -4,3 | -1,6 |

Tabelle 1 a: (3. Teil)

| Beispiel | A | B | C a | D a | 1 a |
|---|---|---|---|---|---|
| Vernetzungssystem | Schwefel/ CBS 2,5/0,6 phr | Schwefel/ CBS 0,5/2,5 phr | 1,2-Bis-(N,N-dibenzyl-thiocarbamoyldisulfido-) -dekan 7,0 phr | -hexan 6,5 phr | -ethan 6,0 phr |
| Kugelzermürbung | | | | | |
| 150 N | 102 | 95 | 97 | 89 | 85 |
| 200 N | 131 | 120 | 126 | 116 | 111 |
| 250 N | 152 | 145 | 158 | 149 | 132 |
| 300 N | - | 194 | - | - | 150 |
| 350 N | - | - | - | - | 176 |
| 400 N | - | - | - | - | - |

Die Versuche zeigen, daß nur mit der Bis(dithio)ethanbrücke ein Abrieb erreichbar ist, der mit den klassischen Schwefelvulkanisaten vergleichbar ist. Das gleiche gilt für die dynamischen Eigenschaften (Goodrich Flexometer, Kugelzermürbung).

Tabelle 2 a: Vulkanisation eines vormastizierten NR (Mooney 70; RRS Nr. 3) mit BDBzTE (7,0 phr) bei erhöhter Reaktionstemperatur (1. Teil)

| | | | Beispiel 2 a | | | | | |
|---|---|---|---|---|---|---|---|---|
| Vulkanisationstemperatur | | | 150 °C | 180 °C | | | | |
| Vulkanisationszeit in min | | | 40 | 5 | 10 | 15 | 20 | 30 |
| Vulkameter 150 °C | | | | | | | | |
| $t_{10}$ | | min | 12,9 | | | | | |
| $t_{90}$ | | min | 29,7 | | | | | |
| Delta t | | min | 16,8 | | | | | |
| Zugfestigkeit | | MPa | 20,5 | 15,7 | 18,1 | 19,3 | 18,9 | 18,4 |
| Bruchdehnung | | % | 506 | 544 | 511 | 503 | 487 | 466 |
| Modul 100 % | | MPa | 1,8 | 1,1 | 1,6 | 1,7 | 1,7 | 1,7 |
| 300 % | | MPa | 10,1 | 6,3 | 9,1 | 9,8 | 9,9 | 9,4 |
| Strukturfestigkeit | | N/mm | 81 | 89 | 81 | 79 | 79 | 76 |
| bleibende Dehnung | | % | 10 | 19 | 13 | 10 | 11 | 9 |
| Härte | 22 °C | Sh.A | 65 | 58 | 64 | 64 | 63 | 64 |
| | 75 °C | Sh.A | 54 | 49 | 51 | 52 | 52 | 52 |
| Elastizität | 22 °C | % | 44 | 40 | 43 | 43 | 42 | 43 |
| | 75 °C | % | 58 | 49 | 55 | 57 | 55 | 57 |
| DIN-Abrieb | | $mm^3$ | 132 | 153 | 143 | 137 | 141 | 149 |
| spez. Gewicht | | $g/mm^3$ | 1,10 | 1,10 | 1,09 | 1,10 | 1,10 | 1,10 |

Tabelle 2 a: (2. Teil)

| | | Beispiel 2 a | | | | |
|---|---|---|---|---|---|---|
| Vulkanisationstemp. | 150 °C | 180 °C | | | | |
| Vulkanisationszeit in min | 40 | 5 | 10 | 15 | 20 | 30 |
| Compr. Set 24 h/70 °C % | 29 | 39 | 35 | 31 | 29 | 30 |
| Goodrich Meth. 1 °C | +23 | +28 | +27 | +25 | +26 | +24 |
| Fließ | -1,6 | -5,2 | -3,4 | -3,3 | -2,9 | -3,5 |
| Kugelzermürbung | | | | | | |
| 150 N | 88 | | | 93 | 95 | 95 |
| 200 N | 116 | | | 113 | 117 | 122 |
| 250 N | 128 | | | 139 | 135 | 142 |
| 300 N | 157 | | | 164 | 159 | 171 |
| 350 N | 179 | | - | - | - | - |

Tabelle 3: Vulkanisation eines vormastizierten NR (Mooney 70; RRS Nr. 3) mit dem Vulkanisationssystem Schwefel/CBS (2,5/0,6 phr) bei erhöhter Reaktionstemperatur

| | | Vergleichsbeispiel E | | | | | |
|---|---|---|---|---|---|---|---|
| Vulkanisationstemperatur | | 150 °C | 180 °C | | | | |
| Vulkanisationszeit in min | | 30 | 5 | 10 | 15 | 20 | 30 |
| Vulkameter 150 °C | | | | | | | |
| $t_{10}$ | min | 7,6 | | | | | |
| $t_{90}$ | min | 12,5 | | | | | |
| Delta t | min | 4,9 | | | | | |
| Zugfestigkeit | MPa | 23,3 | 18,8 | 17,5 | 14,5 | 13,8 | 11,9 |
| Bruchdehnung | % | 558 | 498 | 424 | 510 | 526 | 483 |
| Modul 100 % | MPa | 2,0 | 1,6 | 1,3 | 1,3 | 1,1 | 1,1 |
| 300 % | MPa | 10,1 | 8,5 | 6,6 | 5,7 | 5,4 | 5,3 |
| Strukturfestigkeit | N/mm | 74 | 64 | 26 | 19 | 18 | 16 |
| bleibende Dehnung | % | 16 | 15 | 13 | 9 | 11 | 10 |
| Härte 22 °C | Sh.A | 61 | 58 | 55 | 54 | 53 | 52 |
| 75 °C | Sh.A | 57 | 52 | 46 | 45 | 44 | 43 |
| Elastizität 22 °C | % | 48 | 50 | 47 | 45 | 46 | 44 |
| 75 °C | % | 60 | 60 | 54 | 51 | 50 | 49 |
| DIN-Abrieb | $mm^3$ | 129 | 121 | 148 | 189 | 224 | 247 |
| spez. Gewicht | $g/cm^3$ | 1,10 | 1,10 | 1,10 | 1,10 | 1,10 | 1,10 |

Tabelle 4 a: Vulkanisation eines Verschnittes aus NR und Cis-BR im Gewichtsverhältnis 80 : 20 mit BDBzTE (7,0 phr) (Beispiel 3 a)

| Eigenschaften | | Vulkanisation bei 150 °C in 40 Minuten | nach Alterung bei 100 °C 7 d | 14 d | 21 d |
|---|---|---|---|---|---|
| Zugfestigkeit | MPa | 19,8 | 17,3 | 12,4 | 10,7 |
| Bruchdehnung | % | 512 | 403 | 298 | 243 |
| Modul 100 % | MPa | 1,7 | 2,3 | 2,9 | 3,9 |
| 300 % | MPa | 9,2 | 11,6 | - | - |
| Strukturfestigkeit | N/mm | 79 | 76 | 61 | 49 |
| bleibende Dehnung | % | 13 | 10 | 8 | 7 |
| Härte 22 °C | Sh.A | 63 | 70 | 73 | 75 |
| 75 °C | Sh.A. | 54 | 59 | 63 | 64 |
| Elastizität 22 °C | % | 46 | 49 | 48 | 48 |
| 75 °C | % | 59 | 53 | 54 | 53 |
| DIN-Abrieb | $mm^3$ | 127 | 149 | 181 | 197 |
| spez. Gewicht | $g/cm^3$ | 1,09 | 1,09 | 1,09 | 1,09 |
| Compr. Set 24 h/70 °C | % | 23 | 23 | 25 | 28 |

<u>Tabelle 4 a:</u> (2. Teil)

| Eigenschaften | Vulkanisation bei 150 °C in 40 Minuten | nach Alterung bei 100 °C | | |
|---|---|---|---|---|
| | | 7 d | 14 d | 21 d |
| Kugelzermürbung | | | | |
| 150 N | 89 | 83 | 84 | 89 |
| 200 N | 114 | 110 | 117 | 119 |
| 250 N | 131 | 135 | 140 | 138 |
| 300 N | 162 | 161 | 166 | 164 |
| 350 N | - | 188 | 182 | 193 |
| 400 N | - | - | - | - |

Tabelle 5: Vulkanisation eines Verschnittes aus NR und Cis-BR im Gewichtsverhältnis 80 : 20 mit Schwefel/CBS (2,0/1,0 phr) (Vergleichsbeispiel F)

| Eigenschaften | | | Vulkanisation bei 150 °C in 40 Minuten | nach Alterung bei 100 °C | | |
|---|---|---|---|---|---|---|
| | | | | 7 d | 14 d | 21 d |
| Zugfestigkeit | | MPa | 20,4 | 13,6 | 3,5 | 2,7 |
| Bruchdehnung | | % | 510 | 275 | 60 | 46 |
| Modul 100 % | | MPa | 2,0 | 3,2 | - | - |
| 300 % | | MPa | 9,8 | - | - | - |
| Strukturfestigkeit | | N/mm | 66 | 44 | 12 | 7 |
| bleibende Dehnung | | % | 14 | 5 | 0 | 0 |
| Härte | 22 °C | Sh.A | 62 | 69 | 76 | 80 |
| | 75 °C | Sh.A. | 58 | 63 | 70 | 71 |
| Elastizität | 22 °C | % | 48 | 50 | 44 | 40 |
| | 75 °C | % | 59 | 61 | 58 | 56 |
| DIN-Abrieb | | $mm^3$ | 105 | 214 | 255 | 281 |
| spez. Gewicht | | $g/cm^3$ | 1,09 | 1,09 | 1,09 | 1,09 |
| Compr. Set 24 h/70 °C | | % | 20 | 22 | 24 | 26 |

Tabelle 5: (2. Teil)

| Eigenschaften | Vulkanisation bei 150 °C in 40 Minuten | nach Alterung bei 100 °C 7 d | 14 d | 21 d |
|---|---|---|---|---|
| Kugelzermürbung | | | | |
| 150 N | 98 | 84 | 96 | nicht prüfbar |
| 200 N | 135 | 110 | 130 | |
| 250 N | 158 | 138 | - | |
| 300 N | - | 185 | - | |
| 350 N | - | - | - | |
| 400 N | - | - | - | |

Beispiel 3 und Vergleichsbeispiel F

Aus dem Vergleich geht die erheblich geringere Beeinträchtigung des Abriebwiderstandes bei Alterungsvorgängen hervor.

Tabelle 6 a: Vulkanisation eines SBR 1500 mit BDBzTE (Beispiel 4 a)

| Vulkanisationssystem | | 1,2-Bis(N,N-dibenzylthiocarbamoyldisulfido)-ethan = 7,0 phr | | | | |
|---|---|---|---|---|---|---|
| Eigenschaften | | Vulkanisation bei | nach 7 d Alterung bei | | | |
| | | 150 °C in 40 Min. | 100 °C | 110 °C | 120 °C | 130 °C |
| Zugfestigkeit | MPa | 20,3 | 14,5 | 14,0 | 11,7 | 5,1 |
| Bruchdehnung | % | 502 | 293 | 266 | 197 | 55 |
| Modul 100 % | MPa | 1,9 | 3,3 | 4,0 | 5,3 | - |
| 300 % | MPa | 10,1 | - | - | - | - |
| Strukturfestigkeit | N/mm | 33 | 31 | 20 | 8,5 | - |
| bleibende Dehnung | % | 10 | 6 | 5 | 3 | 1 |
| Härte 22 °C | Sh.A | 64 | 69 | 73 | 75 | 78 |
| 75 °C | Sh.A. | 57 | 65 | 69 | 70 | 74 |
| Elastizität 22 °C | % | 44 | 50 | 51 | 50 | 44 |
| 75 °C | % | 56 | 61 | 60 | 62 | 55 |
| DIN-Abrieb | $mm^3$ | 101 | 112 | 126 | 138 | 173 |
| spez. Gewicht | $g/cm^3$ | 1,12 | 1,12 | 1,12 | 1,12 | 1,12 |
| Compr. Set 24 h/70 °C | % | 21 | 17 | 16 | 17 | 14 |

Tabelle 7: Vulkanisation eines SBR 1500 mit Schwefel/CBS (Vergleichsbeispiel G)

| Vulkanisationssystem | | Schwefel/CBS = 2,2/1,2 phr | | | | |
|---|---|---|---|---|---|---|
| Eigenschaften | | Vulkanisation bei | nach 7 d Alterung bei | | | |
| | | 150 °C in 40 Min. | 100 °C | 110 °C | 120 °C | 130 °C |
| Zugfestigkeit | MPa | 22,0 | 18,3 | 9,5 | 6,2 | 3,6 |
| Bruchdehnung | % | 427 | 309 | 124 | 35 | - |
| Modul 100 % | MPa | 2,4 | 3,5 | 7,1 | - | - |
| 300 % | MPa | 13,1 | 17,7 | - | - | - |
| Strukturfestigkeit | N/mm | 31 | 26 | 6,8 | - | - |
| bleibende Dehnung | % | 8 | 5 | 2 | 1 | 1 |
| Härte 22 °C | Sh.A | 66 | 73 | 78 | 82 | 87 |
| 75 °C | Sh.A. | 60 | 69 | 75 | 78 | 85 |
| Elastizität 22 °C | % | 44 | 60 | 57 | 41 | 38 |
| 75 °C | % | 58 | 65 | 63 | 56 | 53 |
| DIN-Abrieb | $mm^3$ | 98 | 118 | 159 | 167 | 220 |
| spez. Gewicht | $g/cm^3$ | 1,12 | 1,12 | 1,12 | 1,12 | 1,12 |
| Compr. Set 24 h/70 °C | % | 14 | 11 | 12 | 13 | 13 |

Tabelle 8 a: Vulkanisation eines Verschnittes aus NR/BR/SBR im Gewichtsverhältnis 50/30/20 mit BDBzTE (7,0 phr) (Beispiel 5 a)

| Eigenschaften | | | Vulkanisation bei 150 °C in 40 Min. | nach Alterung bei 100 °C 7 d | 14 d | 21 d |
|---|---|---|---|---|---|---|
| Zugfestigkeit | | MPa | 16,1 | 12,1 | 11,3 | 8,0 |
| Bruchdehnung | | % | 483 | 331 | 282 | 244 |
| Modul 100 % | | MPa | 2,6 | 2,9 | 3,8 | 4,0 |
| 300 % | | MPa | 9,5 | 10,3 | - | - |
| Strukturfestigkeit | | N/mm | 59 | 58 | 52 | 42 |
| bleibende Dehnung | | % | 12 | 10 | 7 | 4 |
| Härte | 22 °C | Sh.A | 65 | 72 | 75 | 79 |
| | 75 °C | Sh.A. | 56 | 65 | 70 | 71 |
| Elastizität | 22 °C | % | 38 | 40 | 41 | 39 |
| | 75 °C | % | 53 | 54 | 55 | 53 |
| DIN-Abrieb | | $mm^3$ | 76 | 109 | 126 | 170 |
| spez. Gewicht | | $g/cm^3$ | 1,10 | 1,10 | 1,10 | 1,10 |
| Compr. Set 24 h/70 °C | | % | 22 | 23 | 23 | 24 |

Tabelle 8 a: (2. Teil)

| Eigenschaften | Vulkanisation bei 150 °C in 40 Min. | nach Alterung bei 100 °C 7 d | 14 d | 21 d |
|---|---|---|---|---|
| Kugelzermürbung | | | | |
| 150 N | 96 | 93 | 91 | 97 |
| 200 N | 126 | 117 | 119 | 118 |
| 250 N | 141 | 142 | 140 | 148 |
| 300 N | 167 | 161 | 166 | 167 |
| 350 N | - | 184 | 179 | 192 |
| 400 N | - | - | - | - |

Tabelle 9: Vulkanisation eines Verschnittes aus NR/BR/SBR im Gewichtsverhältnis 50/30/20 mit Schwefel/CBS (2,5/1,5 phr) (Vergleichsbeispiel H)

| Eigenschaften | | | Vulkanisation bei 150 °C in 40 Min. | nach Alterung bei 100 °C 7 d | 14 d | 21 d |
|---|---|---|---|---|---|---|
| Zugfestigkeit | | MPa | 18,1 | 11,6 | 5,1 | 3,7 |
| Bruchdehnung | | % | 459 | 210 | 75 | 40 |
| Modul | 100 % | MPa | 2,2 | 3,5 | - | - |
| | 300 % | MPa | 9,5 | - | - | - |
| Strukturfestigkeit | | N/mm | 61 | 39 | 11 | 6 |
| bleibende Dehnung | | % | 13 | 5 | - | - |
| Härte | 22 °C | Sh.A | 67 | 76 | 79 | 84 |
| | 75 °C | Sh.A. | 58 | 65 | 70 | 76 |
| Elastizität | 22 °C | % | 38 | 41 | 45 | 41 |
| | 75 °C | % | 54 | 56 | 54 | 53 |
| DIN-Abrieb | | $mm^3$ | 74 | 171 | 205 | 251 |
| spez. Gewicht | | $g/cm^3$ | 1,10 | 1,10 | 1,10 | 1,10 |
| Compr. Set 24 h/70 °C | | % | 22 | 24 | 25 | 26 |

Tabelle 9: (2. Teil)

| Eigenschaften | Vulkanisation bei 150 °C in 40 Minuten | nach Alterung bei 100 °C 7 d | 14 d | 21 d |
|---|---|---|---|---|
| Kugelzermürbung | | | | |
| 150 N | 105 | 98 | 96 | nicht prüfbar |
| 200 N | 141 | 118 | 148 | |
| 250 N | 168 | 151 | - | |
| 300 N | - | - | - | |
| 350 N | - | - | - | |
| 400 N | - | - | - | |

Beispiel 6 a und Vergleichsbeispiel I

Zur Bestimmung der Laufleistung wurden Fahrversuche auf einer genau festgelegten Teststrecke, bestehend je zur Hälfte aus Autobahn und Landstraße, durchgeführt. Als Testobjekte dienten Reifen der Dimension 175 SR 14. Als Fahrzeuge kamen zwei Scorpio 2,0 der Firma Ford zum Einsatz. Als Kautschuk für sämtliche Laufflächen wurde ein Vinyl-SBR mit 20 % Styrol und 40 % 1,2 Anordnung der Butadienanteile eingesetzt.
Folgende Qualitäten wurden verglichen:

Vergleichsbeispiel I

| | |
|---|---|
| Vinyl SBR mit 20 % Styrol- und 40 % Vinylanteil | 137,5 Teile |
| hocharomatisches Öl | 37,5 phr |
| ZnO | 3,0 Teile |
| Stearinsäure | 2,0 Teile |
| HAR-Öl | 2,5 Teile |
| KORESIN$^R$ | 2,0 Teile |
| VULKANOX$^R$ 4020 | 1,0 Teile |
| VULKANOX$^R$ 4010 Na | 1,0 Teile |
| Ruß N-339 | 80 Teile |
| Schwefel | 2,2 Teile |
| VULKACIT$^R$ CZ | 1,2 Teile |

Reifenergebnisse (Index Vergleichsbeispiel I = 100)

| Naßrutschen | | Beispiel 6 a (BDBzTE) |
|---|---|---|
| 50 km/h | 100 | 100 |
| Abrieb nach 20 000 km | 100 | 115 |

Die Naßrutschergebnisse wurden nach der "stopping distance"-Methode erhalten. Hierbei wird der Bremsweg auf nasser Asphaltoberfläche gemessen. Das Reifen-Testergebnis zeigt die erheblich günstigere Gestaltung des Kompromisses aus Abriebwiderstand und Naßrutschverhalten.

Beispiel 7 a und Vergleichsbeispiel J

Analog zu Beispiel 6 und 6 a wurde ein weiterer Fahrversuch unter Verwendung eines Integralkautschukes durchgeführt. Es handelte sich dabei um das Copolymerisat gemäß DE-OS 37 10 002 bestehend aus Butadien, Isopren und Styrol. Das charakteristische Merkmal dieses Kautschukes ist ein stark verbreitertes Maximum der tan delta-Temperatur-Funktion, das einem Bereich von -80 °C bis +15 °C überspannt. Die Mooney-Viskosität liegt bei 55.

Folgende Laufstreifenqualitäten wurden gegenübergestellt:

| | Vergleichsbeispiel J |
|---|---|
| Integralkautschuk | 100 phr |
| ZnO | 3 phr |
| Stearinsäure | 2 phr |
| hocharomatisches Öl | 10 phr |
| KORESIN$^R$ | 2 phr |
| VULKANOX$^R$ 4020 | 1 phr |
| VULKANOX$^R$ 4010 Na | 1 phr |
| Ruß N-339 | 50 phr |
| Schwefel | 1,7 phr |
| CBS | 1,2 phr |

Reifenergebnisse (Index Vergleichsbeispiel J)

| Naßrutschen | | Beispiel 7 a (BDBzTE) |
|---|---|---|
| 50 km/h | 100 | 100 |
| Laufleistung nach 20 00 km | 100 | 115 |

## Patentansprüche

1. Verfahren zur Herstellung von Reifenlaufflächen mit erhöhter Laufleistung auf Basis von Polydien-Kautschuken sowie üblichen Zuschlagstoffen wie Rußen, Kieselsäuren, Weichmachern, Harzen und Vulkanisationsmitteln,
   dadurch gekennzeichnet,
   daß man die Kautschuke mit 1,2-Bis-(N,N-dibenzylthiocarbamoyldisulfido)-ethan vernetzt.

2. Verfahren gemäß Anspruch 1,
   dadurch gekennzeichnet,
   daß als Kautschuke NR, IR, BR und SBR oder deren Gemische eingesetzt werden.

3. Verfahren gemäß den Ansprüchen 1 und 2,
   dadurch gekennzeichnet,
   daß als Kautschuke Integralkautschuke eingesetzt werden.

4. Verfahren gemäß Anspruch 1,
   dadurch gekennzeichnet,
   daß das Vernetzungsmittel in einer Menge von 4 bis 9 phr eingesetzt wird.

5. Verfahren gemäß Anspruch 1,
   dadurch gekennzeichnet,
   daß die Vernetzungsreaktion bei Temperaturen von 170 bis 200 °C durchgeführt wird.

## Claims

1. A process for producing tyre treads having increased running performance and based on polydiene rubbers and also conventional additives such as carbon blacks, silicas, plasticizers, resins and vulcanizers, characterized in that the rubbers are cross-linked using 1,2-bis(N,N-dibenzylthiocarbamoyl-disulphido) ethane.

2. A process according to claim 1,
   characterized in that the rubbers used are NR, IR, BR and SBR or mixtures thereof.

3. A process according to either of claims 1 and 2, characterized in that the rubbers used are integral rubbers.

4. A process according to claim 1,
   characterized in that the cross-linker is used in an amount of from 4 to 9 phr.

5. A process according to claim 1,
   characterized in that the cross-linking reaction is carried out at temperatures of from 170 to 200 °C.

## Revendications

1. Procédé de fabrication de bandes de roulement pour pneumatiques, d' une puissance de roulement accrue, à base de caoutchoucs de polydiène, ainsi que d'additifs usuels tels que des noirs de fumée, des acides siliciques, des plastifiants, des résines et des agents de vulcanisation,
   caractérisé en ce que l'on réticule les caoutchoucs avec du 1,2-bis-(N,N-dibenzyl-thiocarbamoyl-disulfido)-éthane.

2. Procédé selon la revendication 1,
   caractérisé en ce que l'on utilise, comme caoutchoucs, NR, IR, BR et SBR ou leurs mélanges.

3. Procédé selon les revendications 1 et 2,
   caractérisé en ce que l'on utilise, comme caoutchoucs, des caoutchoucs intégraux.

**4.** Procédé selon la revendication 1, caractérisé en ce que l'agent de réticulation est utilisé dans une quantité de 4 à 9 phr.

**5.** Procédé selon la revendication 1, caractérisé en ce que la réaction de réticulation est effectuée à des températures de 170 à 200 °C.